# EUROPÄISCHE PATENTSCHRIFT

(11) **EP 2 852 802 B1**
(45) Veröffentlichungstag und Bekanntmachung des Hinweises auf die Patenterteilung: **13.11.2019**
(21) Anmeldenummer: 13722777.3
(22) Anmeldetag: 17.05.2013
(51) Int. Cl.: F27D 5/00

(54) **REGALSYSTEM MIT KERAMISCHEN PLATTEN**
SHELF SYSTEM WITH CERAMIC PLATES
SYSTÈME DE RAYONNAGE AU PLAQUES CÉRAMIQUES

(30) Priorität: 23.05.2012 DE 102012208675
(43) Veröffentlichungstag der Anmeldung: 01.04.2015
(73) Patentinhaber: Saint-Gobain IndustrieKeramik Rödental GmbH, 96472 Rödental (DE)
(72) Erfinder: DORST, Ulrich, 96472 Rödental (DE)
(74) Vertreter: Lendvai, Tomas
(86) Internationale Anmeldenummer: PCT/EP2013/060231
(87) Internationale Veröffentlichungsnummer: WO 2013/174742

(56) Entgegenhaltungen:
- EP-A1- 2 251 628
- DE-A1-102011 120 547
- DE-C1- 4 329 468
- JP-A- H03 255 887
- US-A- 4 185 956
- US-A1- 2007 264 376

## Beschreibung

Die vorliegende Erfindung betrifft ein Regalsystem als Brennhilfsmittel für Hochtemperaturanwendung. Die vorliegende Erfindung betrifft ein Regalsystem als Brennhilfsmittel in Hochtemperaturprozessen mit keramischen Platten und Hohlprofilen.

Tragbalken und Setzplatten aus keramischem Material mit temperaturstabilen Eigenschaften werden beispielsweise als krafttragende Halterungen für Prozessgüter oder als Brennhilfsmittel (BHM) in Hochtemperaturprozessen, wie Brennen und Sintern von technischer Keramik eingesetzt. Für eine wirtschaftliche Nutzung des zur Verfügung stehenden Brennraums kommen Setzsysteme, wie Regalaufbauten, zum Einsatz. Das Beladen der Regale mit zu brennender Ware kann auf unterschiedlicher Art und Weise erfolgen. Im Falle einer Automatisierung wird zunehmend durch ein Handhabungssystem der Regalaufbau nach dem Brennvorgang vereinzelt, um so die Ware leichter von den Regalplatten abnehmen und frische Ware leichter platzieren zu können und um die Regalplatten auch als Transportmittel außerhalb des Brennofens nutzen zu können. Für den Brennprozess werden die mit Ware beladenen Regalplatten wieder zu einem Regalsystem zusammengebaut.

Für den Regalaufbau haben sich Werkstoffe auf SiC-Basis, aufgrund ihrer hohen mechanischen Festigkeit und Temperaturwechselbeständigkeit bewährt. Bedingt durch ein niedriges spezifisches Gewicht und durch eine hohe Kriechbeständigkeit sind SiC-Werkstoffe relativ leicht und formstabil. Somit sind SiC-Werkstoffe für ein automatisches Be- und Entladen besonders geeignet. DE 10 2010 061 134 A1 beschreibt solche eine keramische Platte aus Siliziumcarbid für Brennwagenaufbauten, wobei an der Unterseite der Platte eine balkenartige Hohlkammerverstärkung ausgebildet ist und die balkenartigen Hohlkammern eine Raute umschließen. SiC wandelt sich jedoch in oxidierender Atmosphäre bei Temperaturen größer als 900 °C in Siliziumdioxid um, wodurch sich eine glasige Schicht auch an der Oberfläche der Brennhilfsmittel bildet. In Folge kommt es in Abhängigkeit von Brenntemperatur und Brenndauer an den Kontaktflächen der Brennhilfsmittel zum Kleben. Mit steigender Temperatur nehmen die Oxidationsrate und damit die Ausbildung der Glasschicht zu. Hinzu kommt, dass mit steigender Temperatur die Viskosität der Glasschicht erniedrigt wird, was zu einer besseren Benetzung von Kontaktflächen führt, wodurch die Klebung verstärkt wird. Die in DE 10 2010 061 134 A1 offenbarte keramische Platte besitzt eine große ebene Fläche auf der auch große Brenngüter sicher gelagert werden können. Auch die balkenförmigen Hohlkammerverstärkungen an der Unterseite der Platte liegen bei Einbau in einem Gestell oder einem Brennwagen großflächig auf der Unterlage auf. Diese großen Kontaktflächen zwischen Platte und Brenngut bzw. Platte und Unterlage führen bei hohen Temperaturen in oxidierender Atmosphäre zu einem großflächigen Verkleben von keramischer Platte und Brenngut bzw. Unterlage und somit zu einer Beschädigung des Brennguts oder der Platte. Ein störungsfreier Ablauf beim automatischen Be- und Entladung eines Regalaufbaus ist deshalb bei Brenntemperaturen über 1450°C in oxidierender Atmosphäre nicht mehr gegeben. Ähnliche keramische Platten für Brennhilfsmittel sind auch aus US 2007/264376 und EP-A 2251628 bekannt.

Der vorliegenden Erfindung liegt das Problem zugrunde, ein verbessertes Regalsystem für Hochtemperaturprozesse bereitzustellen, welches bei Anwendung unter hohen Temperaturen an den Kontaktflächen eine geringe Klebeneigung aufweist, indem flächige Kontakte vermieden werden.

Die Aufgabe der Erfindung wird durch Merkmale des Patentanspruchs 1 gelöst. Vorteilhafte Ausgestaltungen der Erfindung ergeben sich aus den Unteransprüchen.

Eine keramische Platte dient als Brennhilfsmittel für Hochtemperaturanwendungen und weist mindestens zwei Stege auf, die an der Oberseite und/oder der Unterseite der keramischen Platte angeordnet sind, wobei die Stege an der Oberseite und Unterseite abgerundet sind. Eine solche Gitterplatte weist dadurch den Vorteil auf, dass die Kontaktflächen der keramischen Platte mit dem Brenngut oder anderen Brennhilfsmitteln (z.B. Regalsystemen) auf punktförmige, allenfalls linienförmige Kontaktstellen reduziert werden. Dadurch wird die Verklebung an den Kontaktstellen vermieden.

Um Brenngut, insbesondere keramische Erzeugnisse herstellen zu können, müssen diese in einem Ofen gebrannt werden. Die keramischen Erzeugnisse werden zum Einbringen und Entnehmen aus dem Ofen auf einer Vorrichtung gelagert, die dem Transport der Erzeugnisse dienen kann. Dafür sind entsprechende Ofenwagen bekannt, die Brennwagenaufbauten aus Stützanordnungen umfassen. Die entsprechenden Halterungen oder Stützsysteme für das Brenngut sind aus mehreren Stützen und Stützträgern, wie Tragbalken, Querbalken und/oder Platten gebildet und werden allgemein als Brennhilfsmittel bezeichnet. Mit Hilfe der Ofenwagen wird dann das Brenngut in den Ofen eingebracht und nach dem Brennen aus dem Ofen wieder entnommen. Die Prozessabläufe können mit solchen Ofenwagen auch automatisiert werden.

Bevorzugt beträgt der Radius des Stegs von 1 mm bis 20 mm und bevorzugt von 2 mm bis 10 mm. Als Radius wird im Sinne der Erfindung der Krümmungsradius des Stegs bezeichnet. Durch die Krümmung des Stegs wird die Auflagefläche minimiert. In den genannten Grenzen ist einerseits eine sichere und stabile Auflage des Brennguts möglich, während andererseits die Kontaktfläche zwischen Brenngut und keramischer Platte so klein gehalten wird, dass beim Brennvorgang ein Verkleben vermieden wird. Des Weiteren werden durch eine Abrundung der Stege Abplatzungen durch Spannungsspitzen beim Aufliegen der keramischen Platte vermieden.

Die Stege weisen mit einem auf der keramischen Platte aufliegenden Brenngut und/oder mit einer oder mehreren weiteren Brennhilfsmitteln, auf denen die keramische Platte aufliegt, eine punkt- oder linienförmige Kontaktfläche auf. Sowohl zwischen den Stegen und dem Brenngut, als auch zwischen den Stegen und den weiteren Brennhilfsmitteln bestehen punkt- oder linienförmige Kontaktflächen. Beispiele für weitere Brennhilfsmittel, die in direktem Kontakt zur keramischen Platte stehen sind insbesondere Setzsysteme wie Regalaufbauten. Durch die Ausbildung von punkt- und linienförmigen Kontaktflächen wird ein Verkleben der keramischen Platte mit dem Brenngut und/oder anderen Brennhilfsmitteln erfindungsgemäß vermieden. Die punktförmigen Kontaktflächen lösen sich durch die Wärmedehnung während des Auf- und Abheizens der Regalsysteme. Das Brenngut sowie die keramischen Platten können somit durch geringen Kraftaufwand von einem Handhabungsgerät ohne Störung gelöst werden.

Die maximale Fläche der punktförmigen Kontaktflächen beträgt bevorzugt 3 mm², besonders bevorzugt 1 mm². Dadurch bedingt wird die Kontaktfläche zwischen Brenngut und keramischer Platte so klein gehalten, dass beim Brennvorgang kein oder nur ein geringes Verkleben auftritt.

Die erfindungsgemäßen Stege der keramischen Platte weisen einen Durchmesser von 5 mm bis 20 mm auf. Der Durchmesser wird dabei an der breitesten Stelle des Stegs gemessen.

Die Stege sind bevorzugt diagonal auf der keramischen Platte angeordnet und erstrecken sich besonders bevorzugt entlang der gesamten keramischen Platte. Mittels einer derartigen Anordnung wird bei der Herstellung von Platten mittels Schlickerguss das Füllen der Form ermöglicht ohne dass es zu Lufteinschlüssen kommt.

In der Ausführungsform des Regalsystems gemäß Anspruch 1 begrenzen jeweils vier Stege der keramischen Platte eine Öffnung rautenförmig.

Die keramische Platte besitzt bevorzugt von 2 x 2 bis 100 x 100 und besonders bevorzugt von 10 x 10 bis 50 x 50 Öffnungen.

Die keramische Platte hat eine Dicke D von 5 mm bis 20 mm und/oder eine Breite B von 500 mm bis 700 mm.

Die Erfindung umfasst ein Regalsystem wie in Anspruch 1 definiert wurde enthaltend:
- mindestens zwei Hohlprofile mit mindestens zwei Stegen an einer Seite des Hohlprofils,
- mindestens eine keramische Platte, die auf den Hohlprofilen angeordnet ist,
wobei das Hohlprofil und die keramische Platte sich nur im Bereich der Stege berühren.

Innerhalb des erfindungsgemäßen Regalsystems kann ein Verkleben der keramischen Platten und der Hohlprofile vermieden werden, da die Kontaktflächen dieser beiden Komponenten minimiert werden. Somit sind die keramischen Platten dem Regalsystem nach dem Brennvorgang widerstandslos und somit auch automatisierbar zu entnehmen.

Die Stege des Hohlprofils und die Stege der keramischen Platte berühren sich nur linienförmig und bevorzugt punktförmig. Die keramische Platte und die Hohlprofile weisen somit den Vorteil auf, dass die Kontaktflächen auf punktförmige, allenfalls linienförmige Kontaktstellen reduziert werden. Dadurch wird die Verklebung an den Kontaktstellen vermieden.

In einer besonders bevorzugten Ausführungsform sind die Stege der keramischen Platte und die Stege des Hohlprofils gegeneinander geneigt, so dass nur punktförmige Kontaktflächen zwischen den Stegen bestehen und die Kontaktflächen dadurch weiter reduziert werden.

In einer bevorzugten Ausführungsform des erfindungsgemäßen Regalsystems beträgt die maximale Fläche der punktförmigen Kontaktflächen zwischen den Stegen des Hohlprofils und den Stegen der keramischen Platte 3 mm², bevorzugt 1 mm². Dadurch bedingt wird die Kontaktfläche zwischen Hohlprofil und keramischer Platte so klein gehalten, dass beim Brennvorgang kein oder nur ein geringes Verkleben auftritt.

Der Steg des Hohlprofils überragt das Hohlprofil um mindestens 1 mm, bevorzugt von 1,5 mm bis 5 mm.

Die Stege des Hohlprofils sind bevorzugt an der Oberseite und der Unterseite des Hohlprofils angeordnet.

Des Weiteren sind die Stege des Hohlprofils entlang der gesamten Breite des Hohlprofils angeordnet.

In einer weiteren möglichen Ausführungsform enthalten die Hohlprofile zusätzliche Noppen. Dadurch liegt die Platte mit den Stegen nur auf den Noppen auf, was zu einer weiteren vorteilhaften Minimierung der Kontaktfläche führt.

Die keramische Platte und/oder das Hohlprofil des erfindungsgemäßen Regalsystems enthalten Siliziumcarbid, bevorzugt rekristallisiertes Siliziumcarbid (RSiC), nitridgebundenes Siliziumcarbid (NSiC), reaktionsgebundenes siliziuminfiltriertes Siliziumcarbid (SiSiC), dicht gesintertes Siliziumcarbid (SSiC) und/oder Gemische davon.

Die Brennhilfsmittel sind im Brennofen hohen Brenntemperaturen ausgesetzt und müssen diesen Stand halten. Sie bestehen deshalb aus einem keramischen Material, z. B. auf der Basis von Al₂O₃, Mullit, RSiC, SiSiC oder NSiC. Die Wahl des jeweiligen Werkstoffs ist dabei abhängig von den jeweiligen Betriebsbedingungen. Die keramischen Materialien werden in zähflüssigem Zustand in Gipsmodelle gefüllt und trocknen darin aus.

Die vorteilhaften Ausgestaltungen der Erfindung werden anhand einer Zeichnung erläutert.

Es zeigen:
- Fig. 1: eine Draufsicht auf eine keramische Regalplatte, hier eine Gitterplatte, nach dem Stand der Technik,
- Fig. 2: eine Querschnittzeichnung der keramischen Regalplatte gemäß Fig. 1, entlang der Linie A-A,
- Fig. 3: ein Ausschnitt im Eckbereich (Z) der keramischen Regalplatte gemäß Fig. 1,
- Fig. 4: eine Draufsicht auf eine erfindungsgemäße keramische Regalplatte, hier eine Gitterplatte,
- Fig. 5: eine Querschnittzeichnung der keramischen Regalplatte gemäß Fig. 4, entlang der Linie A-A,
- Fig. 6: ein Ausschnitt im Eckbereich (Z) der keramischen Regalplatte gemäß Fig. 4,
- Fig. 7: eine Querschnittzeichnung der keramischen Regalplatte gemäß Fig. 6, entlang der Linie G-G,
- Fig. 8: eine Draufsicht auf ein erfindungsgemäßes Hohlprofil, hier ein Balken,
- Fig. 9: eine räumliche Darstellung des Hohlprofils gemäß Figur 8,
- Fig. 10: eine Querschnittzeichnung eines Ausschnitts des Hohlprofils entlang der Linie D-D gemäß Figur 8,
- Fig. 11: eine Querschnittzeichnung des Hohlprofils entlang der Linie C-C gemäß Figur 8
- Fig. 12: eine Draufsicht auf ein Regalsystem mit keramischen Platten und Hohlprofilen,
- Fig. 13: eine Seitenansicht auf ein Regalsystemgemäß Figur 12,
- Fig. 14: eine Querschnittzeichnung des Regalsystems entlang der Linie F-F gemäß Figur 13 und
- Fig. 15: ein Ausschnitt im Berührungsbereich (H) zwischen keramischer Platte und Hohlprofil gemäß Figur 14.

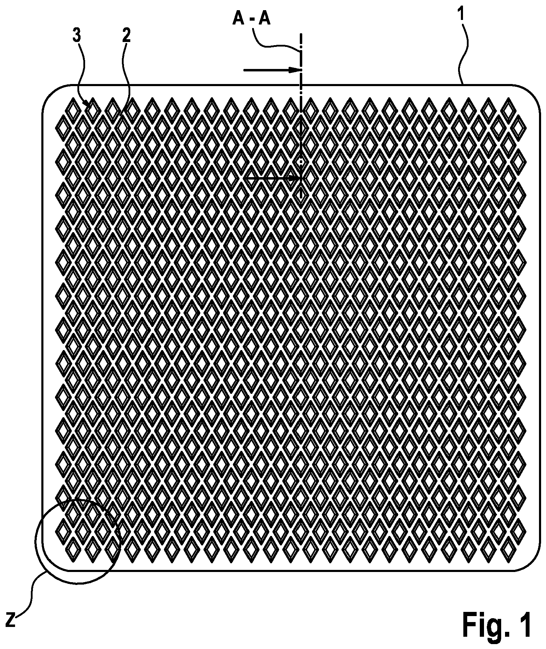

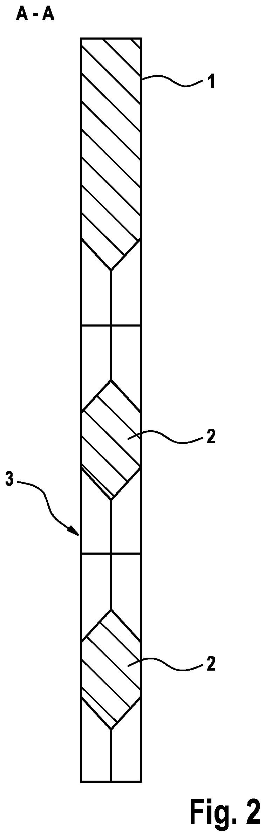

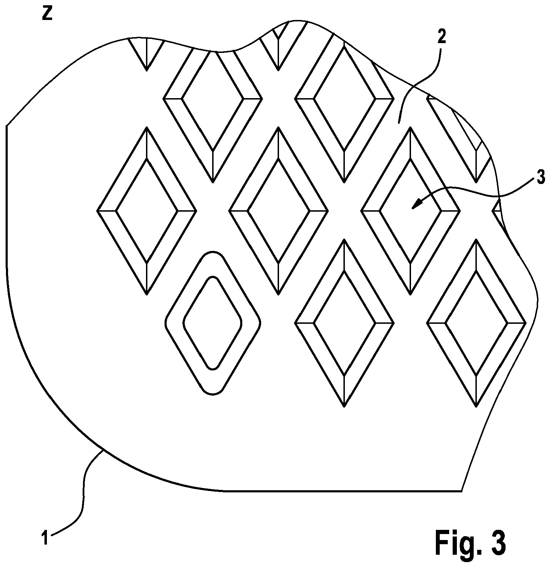

Ein Vergleichsbeispiel gemäß dem Stand der Technik ist in Figuren 1, 2 und 3 dargestellt. Ausführungsbeispiele der Erfindung werden in den nachfolgenden Figuren erläutert.

In den Figuren 1, 2 und 3 ist eine Gitterplatte 1 mit Öffnungen 3 zur Verwendung als hochtemperaturstabile Unterlage in Öfen gemäß dem Stand der Technik dargestellt. Die Gitterplatte (1) wurde mit Silizium und Siliziumcarbid im Schlickergussverfahren geformt und anschließend unter Stickstoffatmosphäre zu Si₃N₄-gebundenem SiC (NSiC) gesintert. Die Gitterplatte (1) hat eine äußere Breite (B) von 580 mm und Dicke (D) von 10 mm.

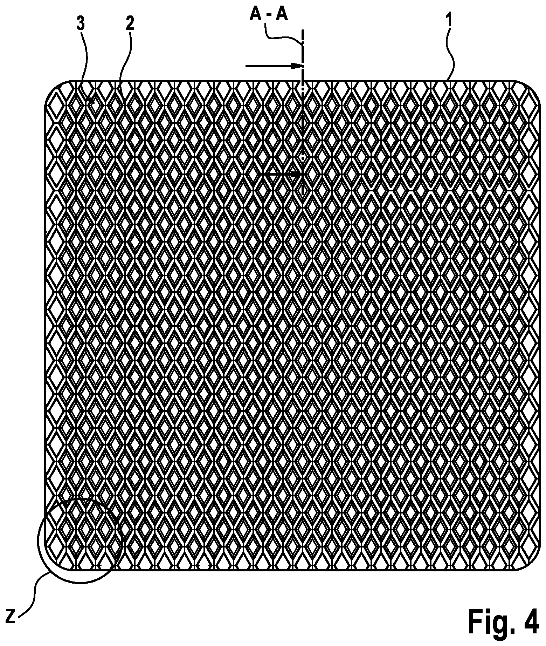

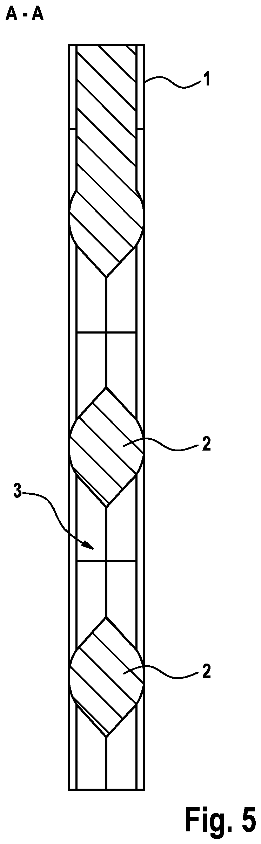

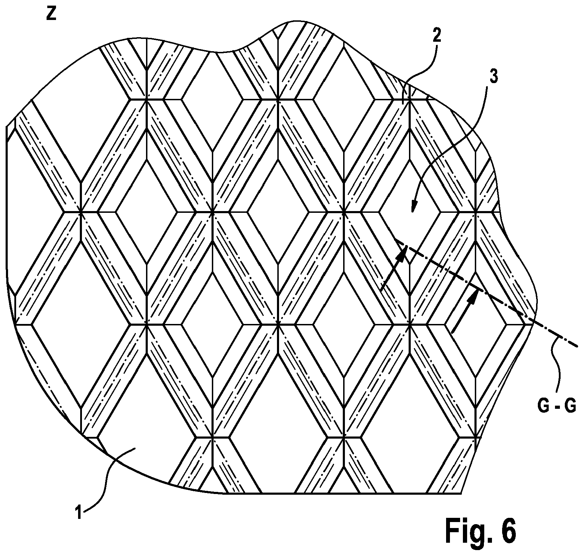

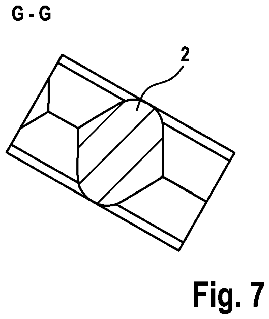

In den Figuren 4, 5, 6 und 7 ist eine keramische Platte 1 mit Öffnungen 3 dargestellt. Die keramische Platte 1 wurde mit Silizium und Siliziumcarbid im Schlickergussverfahren geformt und anschließend unter Stickstoffatmosphäre zu Si₃N₄-gebundenem SiC (NSiC) gesintert. Die keramische Platte 1 hat eine äußere Breite B von 580mm und Dicke (D) von 12 mm.

In ihrer Grundform handelt es sich bei der keramischen Platte 1 ebenfalls um eine Gitterplatte. Die Oberfläche der keramischen Platte 1 unterscheidet sich vom Stand der Technik. Auf den Gittern verlaufen Stege 2, die gegenüber der keramischen Platte 1 um 1 mm erhoben sind. Damit liegt die liegende keramische Platte 1 nur auf Stegen 2 auf. Die Stege 2 sind an der Oberseite gerundet, im Ausführungsbeispiel mit Radius 3,6mm. Dadurch sollen Abplatzungen durch Spannungsspitzen beim Aufliegen der Platte 1 vermieden und die Kontaktflächen der keramischen Platte 1 vermindert werden. Eine Reduzierung der Kontaktflächen führt zu einer erfindungsgemäßen Vermeidung des Verklebens der Teile beim Brennprozess.

Im Ausführungsbeispiel verlaufen die Stege 2 diagonal über die gesamte Breite der keramischen Platte 1. Die Stege 2 könnten aber auch nur in Bereichen, in denen die keramische Platte 1 durch Hohlprofile 4 unterstützt wird oder quer, durch die Knotenpunkte der Rauten als unterbrochener Steg 2, ausgeführt werden.

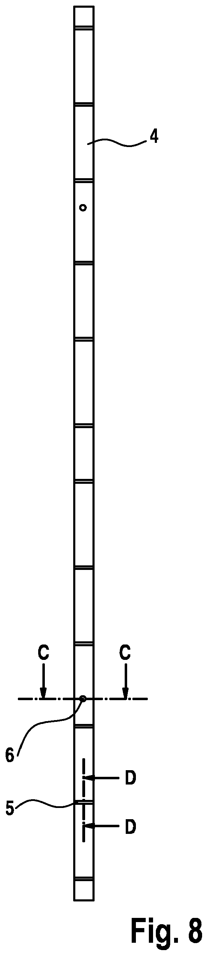

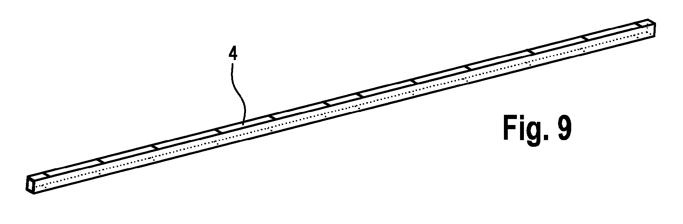

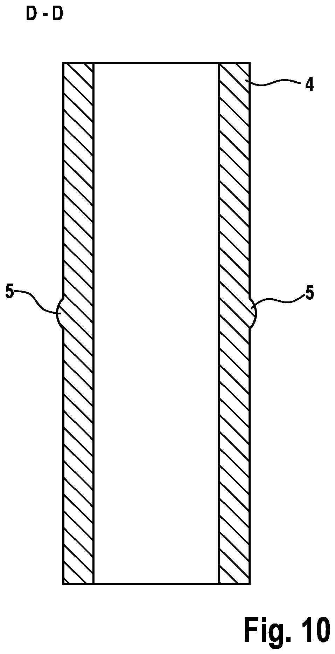

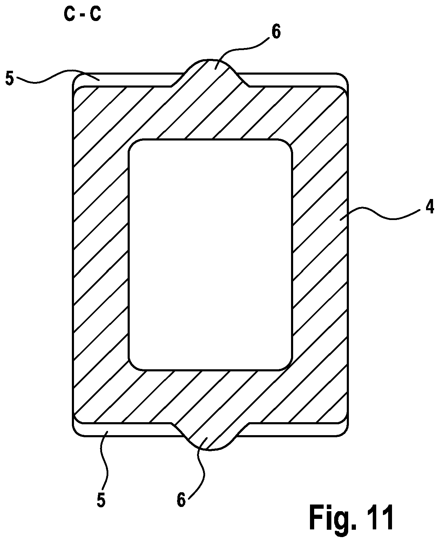

In Figuren 8, 9, 10 und 11 sind Hohlprofile 4 mit einem rechteckigen Querschnitt gezeigt. In den gezeigten Ausführungsformen handelt es sich bei den Hohlprofilen 4 um Balken. Die Hohlprofile 4 wurden mit Silizium und Siliziumcarbid im Schlickergussverfahren geformt und anschließend unter Stickstoffatmosphäre zu Si₃N₄-gebundenem SiC (NSiC) gesintert. Das Hohlprofil 4 hatte eine Länge von 2640 mm bei einer Höhe von 58 mm und einer Breite von 40 mm.

Die Oberfläche des Hohlprofils unterscheidet sich erfindungsgemäß vom Stand der Technik. Auf der Ober- und Unterseite des Hohlprofils 4 verlaufen quer Stege 5, die gegenüber der Hohlprofiloberfläche um 2mm erhoben sind. Damit liegt das Hohlprofil 4 bei hochkantiger Lage nur auf Stegen 5 auf. Die Stege 5 sind an der Oberseite gerundet, im Ausführungsbeispiel mit R=5 mm. Dadurch sollen Abplatzungen durch Spannungsspitzen beim Aufliegen der Hohlprofile 4 vermieden und die Kontaktflächen der Hohlprofile 4 vermindert werden. Eine Reduzierung der Kontaktflächen führt zu einer erfindungsgemäßen Vermeidung des Verklebens der Teile beim Brennprozess. Die Hohlprofile enthalten zusätzlich Noppen 6. Dadurch liegt die Platte mit den Stegen nur auf den Noppen auf, was zu einer weiteren vorteilhaften Minimierung der Kontaktfläche führt.

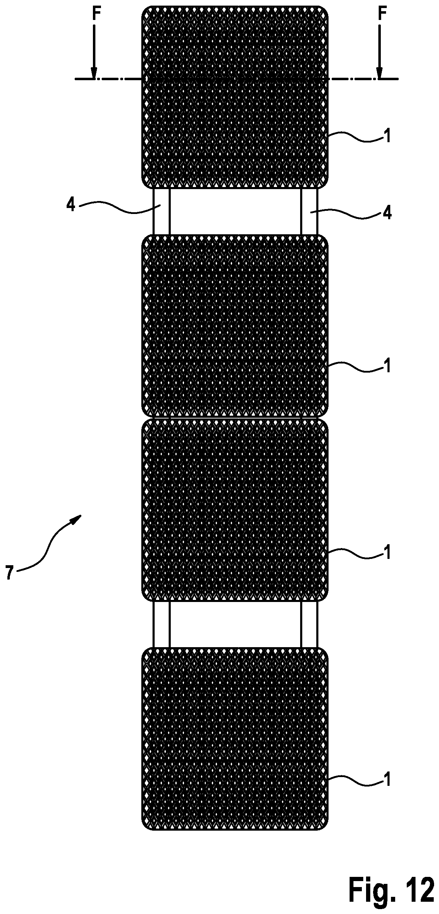

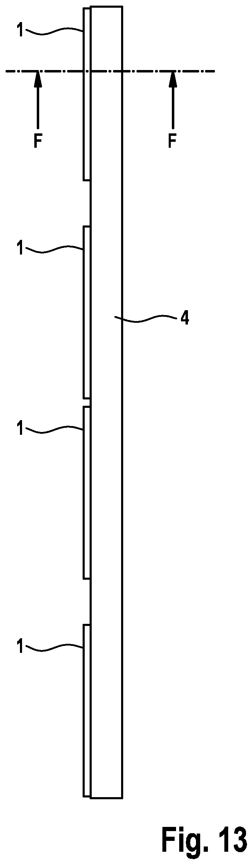

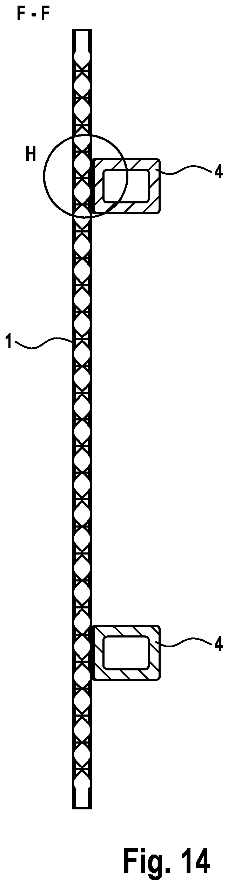

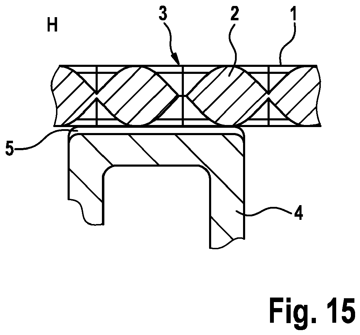

In Figuren 12, 13, 14 und 15 ist ein Regalsystem 7 aus erfindungsgemäßen Hohlprofilen 4 und keramischen Platten 1 gezeigt. Durch einen gegeneinander geneigten Verlauf der Stege 2 und 5 wird die Kontaktfläche der Hohlprofile 4 und keramischen Platten 1 zueinander auf eine punktförmige Auflage reduziert. Dadurch in besonders vorteilhafter Weise ein Verkleben der Teile beim Brennvorgang vermieden.

### Beispiel und Vergleichsbeispiel

Ein erfindungsgemäßes Regalsystem 7 mit Hohlprofilen 4 und keramischen Platten 1 wurde einem Brennvorgang bei 1500°C, einer Haltezeit bei maximaler Temperatur von 10h und einem gesamten Brennzyklus von 75h als Brennhilfsmittel getestet.
Die Kontaktfläche der erfindungsgemäßen Hohlprofile 4 und keramischen Platten 1 wird durch einen gegeneinander geneigten Verlauf der Stege 2 und 5 zueinander auf eine punktförmige Auflage reduziert.

Die erfindungsgemäßen Hohlprofile 4 und keramischen Platten 1 zeigten im Vergleich zum Stand der Technik bei verringerter Kontaktfläche bereits nach dem Sintern überraschender Weise kein oder nur ein geringeres Kleben.

Die punktförmigen Kontaktflächen lösen sich durch die Wärmedehnung während des Auf- und Abheizens der Regalsysteme. Ein restliches Zusammenhaften der Hohlprofile 4 und der keramischen Platten 1 kann durch geringen Kraftaufwand von einem Handhabungsgerät ohne Störung gelöst werden.

### Bezugszeichenliste

- 1: keramische Platte, Gitterplatte, Regelplatte
- 2: Steg
- 3: Öffnung
- 4: Hohlprofil, Balken
- 5: Steg
- 6: Noppe
- 7: Regalsystem, Setzsystem
- B: Breite B der keramischen Platte
- D: Dicke D der keramischen Platte

## Patentansprüche

1. Regalsystem (7) für Hochtemperaturanwendung als Brennhilfsmittel, mindestens umfassend
- mindestens zwei Hohlprofile (4) mit mindestens zwei Stegen (5) an einer Seite des Hohlprofils (4),
- mindestens eine keramische Platte (1) mit mindestens zwei Stegen (2) an der Oberseite und der Unterseite der keramischen Platte (1), die auf den Hohlprofilen (4) angeordnet ist,
wobei
- die Stege (2) der keramischen Platte (1) an der Oberseite und Unterseite abgerundet sind,
- die Stege (2) der keramischen Platte (1) eine punkt- oder linienförmige Kontaktfläche mit einem auf der keramischen Platte (1) aufliegenden Brenngut bilden,
- die Stege (2) der keramischen Platte (1) eine punkt- oder linienförmige Kontaktfläche mit einem oder mehreren weiteren Brennhilfsmitteln, auf denen die keramischen Platte (1) aufliegt, bilden,
- vier Stege (2) der keramischen Platte (1) eine Öffnung (3) rautenförmig begrenzen, und
wobei das Hohlprofil (4) und die keramische Platte (1) sich nur im Bereich der Stege (2, 5) berühren und die Stege (5) des Hohlprofils (4) und die Stege (2) der keramischen Platte (1) sich nur linienförmig oder punktförmig berühren.

2. Regalsystem (7) nach Anspruch 1, wobei der Krümmungsradius des Stegs (2) der keramischen Platte (1) von 1 mm bis 20 mm und bevorzugt von 2 mm bis 10 mm beträgt.

3. Regalsystem (7) nach Anspruch 1 oder 2, wobei die maximale Fläche der punktförmigen Kontaktflächen 3 mm², bevorzugt 1 mm², beträgt.

4. Regalsystem (7) nach einem der Ansprüche 1 bis 3, wobei der Steg (2) der keramischen Platte (1) einen Durchmesser von 5 mm bis 20 mm aufweist.

5. Regalsystem (7) nach einem der Ansprüche 1 bis 4, wobei die Stege (2) der keramischen Platte (1) diagonal auf der keramische Platte (1) angeordnet sind und bevorzugt entlang der gesamten keramischen Platte (1) angeordnet sind.

6. Regalsystem (7) nach einem der Ansprüche 1 bis 5, wobei die keramische Platte (1) von 2 x 2 bis 100 x 100 und bevorzugt von 10 x 10 bis 50 x 50 Öffnungen (3) aufweist.

7. Regalsystem (7) nach einem der Ansprüche 1 bis 6, wobei die keramische Platte (1) eine Dicke D von 5 mm bis 20 mm und/oder eine Breite B von 500 mm bis 700 mm aufweist.

8. Regalsystem (7) nach einem der Ansprüche 1 bis 7, wobei die maximale Fläche der punktförmigen Kontaktflächen und/oder linienförmigen Kontaktflächen zwischen den Stegen (5) des Hohlprofils (4) und den Stegen (2) der keramischen Platte (1) 3 mm², bevorzugt 1 mm², beträgt.

9. Regalsystem (7) nach einem der Ansprüche 1 bis 8, wobei der Steg (5) des Hohlprofils das Hohlprofil (4) um mindestens 1 mm, bevorzugt von 1,5 mm bis 5 mm überragt.

10. Regalsystem (7) nach einem der Ansprüche 1 bis 9, wobei Stege (5) des Hohlprofils an der Oberseite und der Unterseite des Hohlprofils (4) angeordnet sind.

11. Regalsystem (7) nach einem der Ansprüche 1 bis 10, wobei Stege (5) des Hohlprofils entlang der gesamten Breite des Hohlprofils (4) angeordnet sind.

12. Regalsystem (7) nach einem der Ansprüche 1 bis 11, wobei die keramische Platte (1) und/oder das Hohlprofil (4) Siliziumcarbid, bevorzugt rekristallisiertes Siliziumcarbid (RSiC), nitridgebundenes Siliziumcarbid (NSiC), reaktionsgebundenes siliziuminfiltriertes Siliziumcarbid (SiSiC), dicht gesintertes Siliziumcarbid (SSiC) und/oder Gemische davon enthält.

## Claims

1. Shelf system (7) for high-temperature application as kiln furniture, at least comprising
- at least two hollow profiles (4) with at least two webs (5) on one side of the hollow profile (4),
- at least one ceramic plate (1) with at least two webs (2) on the upper side and the lower side of the ceramic plate (1) that are arranged on the hollow profiles (4),
wherein
- the webs (2) of the ceramic plate (1) are rounded on the upper side and the lower side,
- the webs (2) of the ceramic plate (1) form a punctiform or linear contact surface with an object to be fired resting on the ceramic plate (1),
- the webs (2) of the ceramic plate (1) form a punctiform or linear contact surface with one or a plurality of further items of kiln furniture on which the ceramic plate (1) rests,
- four webs (2) of the ceramic plate (1) delimit an opening (3) in the shape of a diamond, and
wherein the hollow profile (4) and the ceramic plate (1) touch each other only in the region of the webs (2, 5) and the webs (5) of the hollow profile (4) and the webs (2) of the ceramic plate (1) touch each other only in the form of a line or a point.

2. Shelf system (7) according to claim 1, wherein the radius of curvature of the web (2) of the ceramic plate (1) is from 1 mm to 20 mm and preferably from 2 mm to 10 mm.

3. Shelf system (7) according to claim 1 or 2, wherein the maximum area of the punctiform contact surfaces is 3 mm², preferably 1 mm².

4. Shelf system (7) according to one of claims 1 to 3, wherein the web (2) of the ceramic plate (1) has a diameter of 5 mm to 20 mm.

5. Shelf system (7) according to one of claims 1 to 4, wherein the webs (2) of the ceramic plate (1) are arranged diagonally on the ceramic plate (1) and are preferably arranged along the entire ceramic plate (1).

6. Shelf system (7) according to one of claims 1 to 5, wherein the ceramic plate (1) has from 2 x 2 to 100 x 100 and preferably from 10 x 10 to 50 x 50 openings (3).

7. Shelf system (7) according to one of claims 1 to 6, wherein the ceramic plate (1) has a thickness D of 5 mm to 20 mm and/or a width B of 500 mm to 700 mm.

8. Shelf system (7) according to one of claims 1 to 7, wherein the maximum area of the punctiform contact surfaces and/or linear contact surfaces between the webs (5) of the hollow profile (4) and the webs (2) of the ceramic plate (1) is 3 mm², preferably 1 mm².

9. Shelf system (7) according to one of claims 1 to 8, wherein the web (5) of the hollow profile (4) protrudes beyond the hollow profile (4) by at least 1 mm, preferably from 1.5 mm to 5 mm.

10. Shelf system (7) according to one of claims 1 to 9, wherein the webs (5) of the hollow profile are arranged on the upper side and the lower side of the hollow profile (4).

11. Shelf system (7) according to one of claims 1 to 10, wherein the webs (5) of the hollow profile are arranged along the entire width of the hollow profile (4).

12. Shelf system (7) according to one of claims 1 to 11, wherein the ceramic plate (1) and/or the hollow profile (4) contains silicon carbide, preferably recrystallized silicon carbide (RSiC), nitride-bonded silicon carbide (NSiC), reaction-bonded silicon-infiltrated silicon carbide (SiSiC), densely sintered silicon carbide (SSiC), and/or mixtures thereof.

## Revendications

1. Système de rayonnage (7) pour utilisation à haute température comme accessoire d'enfournement, comportant au moins
- au moins deux profilés creux (4) comportant au moins deux nervures (5) sur un côté du profilé creux (4) ;
- au moins une plaque céramique (1) comportant au moins deux nervures (2) sur le côté supérieur et le côté inférieur de la plaque céramique (1), qui est disposée sur les profilés creux (4),
dans lequel
- les nervures (2) de la plaque céramique (1) sont arrondies sur le côté supérieur et le côté inférieur ;
- les nervures (2) de la plaque céramique (1) forment une surface de contact ponctuel ou linéaire avec un produit à cuire reposant sur la plaque céramique (1) ;
- les nervures (2) de la plaque céramique (1) forment une surface de contact ponctuel ou linéaire avec un ou plusieurs autres accessoires d'enfournement, sur lesquels repose la plaque céramique (1) ;
- quatre nervures (2) de la plaque céramique (1) délimitent en forme de losange une ouverture (3) ; et
dans lequel le profilé creux (4) et la plaque céramique (1) se touchent seulement dans la zone des nervures (2, 5) et les nervures (5) du profilé creux (4) et les nervures (2) de la plaque céramique (1) se touchent seulement de façon linéaire ou de façon ponctuelle.

2. Système de rayonnage (7) selon la revendication 1, dans lequel le rayon de courbure de la nervure (2) de la plaque céramique (1) est de 1 mm à 20 mm et, de préférence, de 2 mm à 10 mm.

3. Système de rayonnage (7) selon l'une des revendications 1 ou 2, dans lequel la surface maximale des surfaces de contact ponctuel est de 3 mm², de préférence de 1 mm².

4. Système de rayonnage (7) selon l'une des revendications 1 à 3, dans lequel la nervure (2) de la plaque céramique (1) présente un diamètre de 5 mm à 20 mm.

5. Système de rayonnage (7) selon l'une des revendications 1 à 4, dans lequel les nervures (2) de la plaque céramique (1) sont disposées en diagonale sur la plaque céramique (1) et, de préférence, sont disposées le long de toute la plaque céramique (1).

6. Système de rayonnage (7) selon l'une des revendications 1 à 5, dans lequel la plaque céramique (1) présente des ouvertures (3) de 2 x 2 à 100 x 100 et, de préférence, de 10 x 10 à 50 x 50.

7. Système de rayonnage (7) selon l'une des revendications 1 à 6, dans lequel la plaque céramique (1) présente une épaisseur D de 5 mm à 20 mm et/ou une largeur B de 500 mm à 700 mm.

8. Système de rayonnage (7) selon l'une des revendications 1 à 7, dans lequel la surface maximale des surfaces de contact ponctuel et/ou des surfaces de contact linéaire entre les nervures (5) du profilé creux (4) et les nervures (2) de la plaque céramique (1) est de 3 mm², de préférence, de 1 mm².

9. Système de rayonnage (7) selon l'une des revendications 1 à 8, dans lequel la nervure (5) du profilé creux dépasse le profilé creux (4) d'au moins 1 mm, de préférence, de 1,5 mm à 5 mm.

10. Système de rayonnage (7) selon l'une des revendications 1 à 9, dans lequel les nervures (5) du profilé creux sont disposées sur le côté supérieur et le côté inférieur du profilé creux (4).

11. Système de rayonnage (7) selon l'une des revendications 1 à 10, dans lequel les nervures (5) du profilé creux sont disposées le long de toute la largeur du profilé creux (4).

12. Système de rayonnage (7) selon l'une des revendications 1 à 11, dans lequel la plaque céramique (1) et/ou le profilé creux (4) contiennent du carbure de silicium, de préférence du carbure de silicium recristallisé (RSiC), du carbure de silicium lié par nitrure (NSiC), du carbure de silicium infiltré de silicium lié par réaction (SiSiC), du carbure de silicium fritté de façon dense (SSiC) et/ou des mélanges de ceux-ci.
